# EUROPEAN PATENT SPECIFICATION

(11) **EP 3 783 686 B1**
(45) Date of publication and mention of the grant of the patent: **04.05.2022**
(21) Application number: 19769703.0
(22) Date of filing: 08.07.2019
(51) Int. Cl.: H01M 10/613, H01M 10/625, H01M 10/647, H01M 10/6554, H01M 10/653, H01M 50/116

(54) **BATTERY MODULE**
BATTERIEMODUL
MODULE DE BATTERIE

(30) Priority: 28.06.2019 CN 201920997463 U
(43) Date of publication of application: 24.02.2021
(73) Proprietor: Jiangsu Contemporary Amperex Technology Limited, Changzhou, Jiangsu 213300 (CN)
(72) Inventor: ZHANG, Hua, Changzhou Jiangsu 213300 (CN)
(74) Representative: DREISS Patentanwälte PartG mbB
(86) International application number: PCT/CN2019/095039
(87) International publication number: WO 2020/258369

(56) References cited:
- CN-A- 106 229 430
- CN-U- 208 173 663
- CN-U- 209 747 614
- DE-A1-102010 012 993
- DE-A1-102018 133 391
- US-A1- 2019 131 596

## Description

### TECHNICAL FIELD

The present disclosure relates to the field of energy storage devices, and particularly, to a battery module.

### BACKGROUND

A battery module is generally used as an energy storage system of a new energy vehicle, and the existing battery module includes a metal lower case. The metal lower case may generate spatter when being welded with other components such as an upper cover, and thus can lead to functional failures of other components. In addition, the metal lower case has a great weight and a lot of parts thereof are required to be electrically insulated. Once the insulation function of some parts fails, the quality of the battery module may be problematic.

A heat conducting plate is usually provided to dissipate heat from the battery module. When the lower case is welded to the heat conducting plate, the above-mentioned spattering problem also exists. Therefore, it is urgent to find a solution how to form a stable connection between the lower case and the heat conducting plate.

Prior art document DE102010012993A1 discloses a battery, the battery (1) has a set of single cells (2) secured at a heat guide plate (6) by attachment members i.e. rivets. The attachment members and a framework of the single cells are formed as a common mold part using an injection molding process and made of electrically insulating plastic. The attachment members comprise a recess that is introduced into the heat guide plate. The attachment members extend over a surface area of the heat guide plate, where an upper area of the attachment members exhibits larger cross-section than the recess.

Prior art document US20190131596A1 discloses a battery module having first and second battery cells, a u-shaped frame member, a thermally conductive layer, a top cover plate, and first and second side cover plates is provided. The u-shaped frame member has a bottom wall and first and second side walls coupled to the bottom wall that extend upwardly from the bottom wall. The u-shaped frame member defines an interior space that holds the first and second battery cells therein. The first and second battery cells are disposed directly on the thermally conductive layer. The top cover plate is coupled to the first and second side walls to enclose a top open region of the u-shaped frame member. The first side cover plate that is coupled to the top cover plate and the bottom wall to enclose a first side open region of the u-shaped frame member.

Prior art document DE102018133391A1 discloses a battery module comprising: a battery group formed by stacking a plurality of battery cells each of which includes electrode tabs; a cooling case comprising a cooling plate which is arranged correspondingly to one side of the sides of the battery group in which the electrode tabs are not extended, and side plates which are arranged on both sides of the battery group perpendicular to one side of the sides so as to accommodate the battery group; a cover plate disposed on the other side of the battery pack; and a front cover part and a rear cover part disposed on both sides of the outer front and rear of the battery pack in a direction in which the electrode tabs are elongated.

Prior art document CN106229430A discloses a power cell box. The power cell box comprises a housing, a plurality of cell modules installed in the housing, and cell connection pieces. The housing is equipped with module slots, and the cell modules are inserted in the slots. Each cell module comprises a module frame and no less than two soft-packed cells arranged in the module frame.

### SUMMARY

The present disclosure provides a battery module, aiming to solve the problems in the related art and achieve a stable connection between the lower case and the heat conducing plate.

The present disclosure provides a battery module, including a lower case, a plurality of battery cells sequentially stacked and received in the lower case; and a heat conducting plate;
wherein a boss is formed on the lower case;
the heat conducting plate is provided with a receiving hole; and
the boss fits in the receiving hole, and a part or an entirety of the boss is fixed in the receiving hole.

In an embodiment, the lower case is made of an insulating material.

In an embodiment, the heat conducting plate is made of metal.

In an embodiment, the receiving hole is a circular hole;
the boss forms a connecting portion and a limiting portion;
the connecting portion is located in the receiving hole, and the limiting portion limits the heat conducting plate; and
the receiving hole is a tapered hole; a surface of the boss facing away from the plurality of battery cells is flush with a surface of the heat conducting plate facing away from the plurality of battery cells.

In an embodiment, a plurality of receiving holes is provided, and the plurality of the receiving holes is arranged at an edge portion of the heat conducting plate along a length direction of the battery module; and/or the plurality of the receiving holes is arranged at the edge portion of the heat conducting plate along a width direction of the battery module.

In an embodiment, the lower case comprises two side plates and two end plates, and the two end plates are respectively fixedly connected to the two side plates; a plurality of bosses corresponding to the plurality of receiving holes is arranged at bottoms of the two side plates along the length direction of the battery module; and/or the plurality of bosses is arranged at the bottoms of the two end plates along the width direction of the battery module.

In an embodiment, each of the two side plates comprises a first plate and a second plate which are connected in an L shape;
the first plate extends along a height direction of the battery module;
the second plate extends along the width direction of the battery module; and
the plurality of bosses is disposed on the second plate.

In an embodiment, the lower case is provided therein with a heat conducting structural adhesive fixed at the lower case.

In an embodiment, the battery module further includes an upper cover, and the upper cover and the lower case define a receiving cavity for receiving the plurality of the battery cells.

The technical solutions provided by the present disclosure can achieve the following beneficial effects.

The battery module provided by the present disclosure includes a lower case, a plurality of battery cells sequentially stacked and received in the lower case; and a heat conducting plate. A boss is formed on the lower case. The heat conducting plate is provided with a receiving hole. The boss fits in the receiving hole, and the boss is hot-melted and fixed in the receiving hole. Through the fitting of the boss and the receiving hole and the subsequent hot-melting, the hot-melted boss forms a fixed connection with the receiving hole, which solves the spattering problem caused by welding in the related art and improves the connection strength between the lower case and the heat conducting plate.

It should be understood that the above general description and the following detailed description are merely illustrative and are not intended to limit the present disclosure.

### DESCRIPTION OF DRAWINGS

In order to more clearly illustrate the technical solutions of the present disclosure or in the related art, drawings used in the specific embodiments or the description of the related art will be briefly described below. The drawings introduced as below merely illustrate some embodiments of the present disclosure, and those skilled in the art can obtain other drawings based on these drawings without any creative efforts.
FIG. 1 is an exploded view of a battery module provided in an embodiment of the present disclosure;
FIG. 2 is a top view of a battery module provided in a first embodiment of the present disclosure;
FIG. 3 is a cross-sectional view taken along line A-A in FIG. 2;
FIG. 4 is an enlarged view of a portion B in FIG. 3;
FIG. 5 is a schematic exploded view showing a structure of the battery module provided in the first embodiment of the present disclosure, in which a lower case and a heat conducting plate are to be fitted with each other;
FIG. 6 is an enlarged view of a portion C in FIG. 5;
FIG. 7 is a top view of a battery module provided in a second embodiment of the present disclosure;
FIG. 8 is a cross-sectional view taken along line E-E in FIG. 7;
FIG. 9 is an enlarged view of a portion F in FIG. 8;
FIG. 10 is a schematic exploded view showing a structure of the battery module provided in the second embodiment of the present disclosure, in which the lower case and the heat conducting plate are to be fitted with each other; and
FIG. 11 is an enlarged view of a portion D in FIG. 10.

### Reference signs:

- 1: battery module;
11 lower case;
111 boss;
111a connecting portion;
111b limiting portion;
112 side plate
112a first plate;
112b second plate;
113 end plate;
- 12: battery cell;
- 13: top cover;
- 14: structural adhesive;
- 15: heat conducting plate; and
151 receiving hole.

The drawings described herein, which illustrate the embodiments of the present disclosure, are incorporated in and constitute a part of the specification, and used to explain the principles of the present disclosure in combination with the specification.

### DESCRIPTION OF EMBODIMENTS

The technical solutions of the present disclosure will be clearly and thoroughly described as follow with reference to the accompanying drawings. It is obvious that the described embodiments are parts of the present disclosure, rather than all embodiments. Based on the embodiments of the present disclosure, all other embodiments obtained by those skilled in the art without paying any inventive efforts shall fall within the protection scope of the present disclosure.

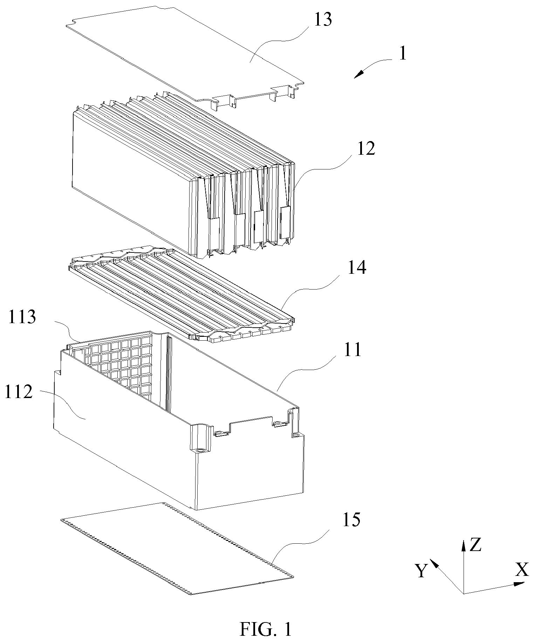

FIG. 1 is an exploded view of a battery module provided in a first embodiment of the present disclosure. As shown in FIG. 1, the embodiment of the present disclosure provides a battery module 1. The battery module 1 includes a lower case 11, a plurality of battery cells 12 sequentially stacked and received in the lower case 11, and an upper cover 13. The upper cover 13 and the lower case 11 together form a receiving cavity for receiving the plurality of battery cells 12.

An electrode assembly and electrolyte are disposed in the battery cell 12, and the electrode assembly electrochemically reacts with the electrolyte to output electric energy. Since heat generated during the reaction should be dissipated in time, the battery module 1 further includes a heat conducting plate 15 for heat dissipation.

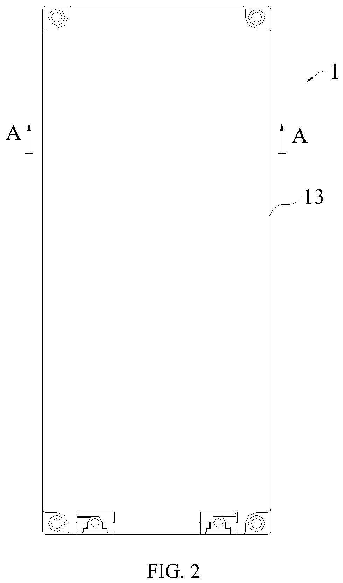

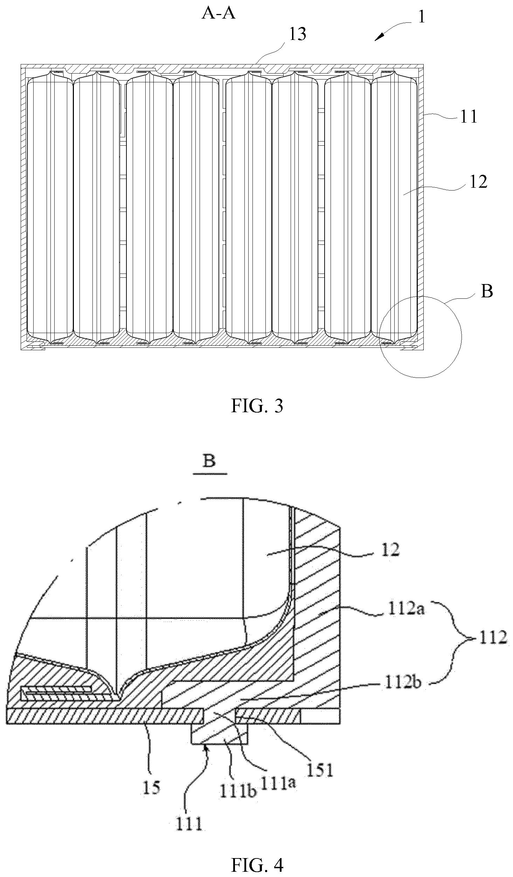

FIG. 2 is a top view of a battery module provided in a first embodiment of the present disclosure, FIG. 3 is a cross-sectional view taken along line A-A in FIG. 2, and FIG. 4 is an enlarged view of a portion B in FIG. 3.

A boss 111 is formed on the lower case 11, and the heat conducting plate 15 is provided with a receiving hole 151. The boss 111 fits in the receiving hole 151. A part or an entirety of the boss 111 is fixed in the receiving hole 151. Thus, the spattering problem caused by welding in the related art can be solved, and the connection strength between the lower case 11 and the heat conducting plate 15 can be increased. The battery module provided by the embodiment of the present disclosure is provided with the receiving hole 151 on the heat conducting plate 15 and a boss 111 is formed on the lower case 11, so that compared with the case in which the heat conducting plate 15 is inj ection-molded on the lower case 11 as a whole, the heat conducting plate 15 is only locally heated instead of being heated for the entire large area. Therefore, problems such as high temperature deterioration will not occur to the heat conducting plate 15, and a relatively large deformation, which will result in a decrease in flatness, will not occur. The reason for that is once the flatness of the heat conducting plate 15 is lowered, the contact effect between the battery module 1 and the outside will be affected, thereby affecting the heat dissipation of the battery module 1.

The lower case 11 and the heat conducting plate 15 adopt a split structure as described above, and thus the lower case 11 and the heat conducting plate 15 can be made of different materials. For example, the lower case 11 can be made of an insulating material, so as to solve the problem of metal spattering during the welding process of the metal lower case in the related art while reducing the weight of the battery module 1. The heat conducting plate 15 can be made of a material having a good thermal conductivity, such as using a metal heat conducting plate 15 to dissipate the heat of the battery cells 12, thereby improving the heat dissipation effect. In addition, the lower case 11 made of the insulating material can solve problems such as a lots of parts of the metal lower case are required to be insulated and insulations are often ineffective.

The boss 111 may be formed in the injection molding process of the lower case 11, and the receiving hole 151 can be formed on the heat conducting plate 15 by mechanical processing. Thus, the molding processes of the boss 111 and the receiving hole 151 are both very simple, and it is also easy to implement the hot-melting process of the boss 111 and the receiving hole 151.

In an embodiment, the battery module 1 may include two side plates 112 and two end plates 113. The side plates 112 and the end plates 113 fix the battery cells 12 to restrict the expansion of the battery cells 12. The heat conducting plate 15 can be connected to ends of the side plates 112 and the end plates 113 facing away from the upper cover 13, i.e., being connected to bottoms of the side plates 112 and/or the end plates 113. When the plurality of battery cells 12 is disposed in the lower case 11, the heat can be dissipated through the heat conducting plate 15.

The side plate 112 may include a first plate 111a, and the above boss 111 is disposed on the first plate 111a. It is also possible that as shown in FIG. 4, the side plate 112 includes a first plate 111a and a second plate 111b which are connected in an L shape. The first plate 111a extends in a height direction (Z direction in FIG. 1) of the battery module 1, and the second plate 111b extends in a width direction (X direction) of the battery module 1. The above boss 111 is provided on the second plate 111b. In an embodiment, the boss 111 and the side plate 112 can be formed into one piece by injection molding. In other embodiments, the boss 111 can also be disposed on the end plate 113 and formed into one piece with the end plate 113 by injection molding.

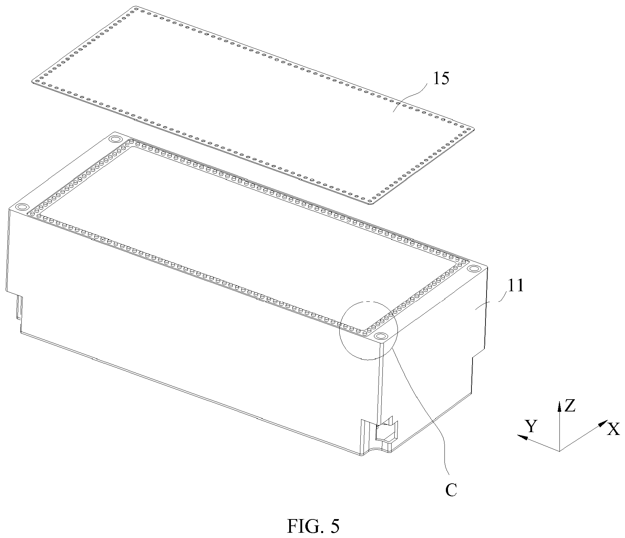

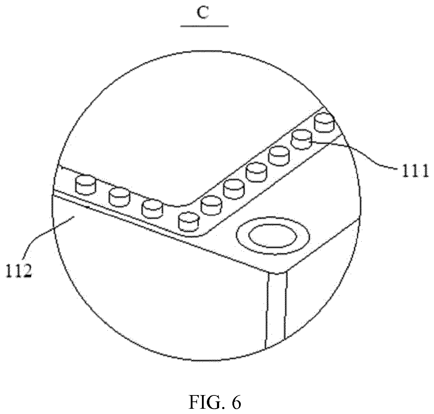

FIG. 5 is a schematic exploded view showing a structure of the battery module provided in the first embodiment of the present disclosure, in which the lower case and the heat conducting plate are to be fitted with each other, FIG. 6 is an enlarged view of a portion C in FIG. 5.

In the specific embodiment, the receiving hole 151 is a circular hole, and the boss 111 is cylindrical before hot-melting, as shown in FIG. 6. The hot-melted boss 111 forms a connecting portion 111a and a limiting portion 111b. Referring to FIG. 4, the connecting portion 111a is located in the receiving hole 151, and the limiting portion 111b limits the heat conducting plate 15.

The above structure can achieve a quick assembly of the heat conducting plate 15, and the limitation effect of the limiting portion 111b prevents the heat conducting plate 15 from escaping, thereby improving the reliability of the connection between the heat conducting plate 15 and the lower case 11.

The above receiving hole 151 and the boss 111 can have other shapes, as long as they can satisfy that the boss 111 is hot-melted after passing through the receiving hole 151.

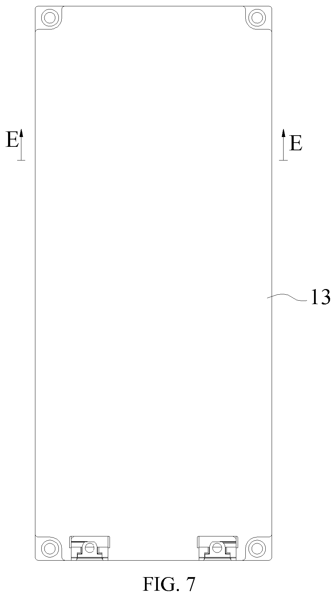

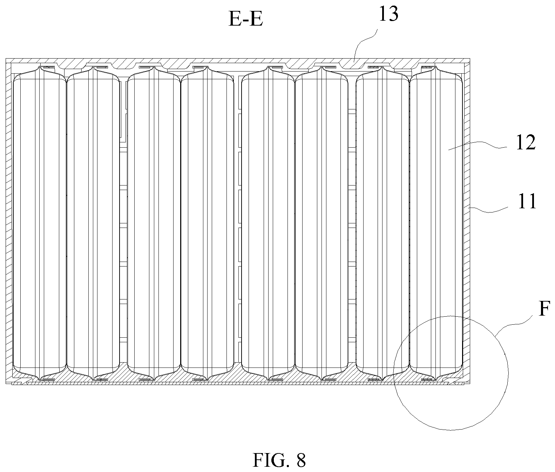

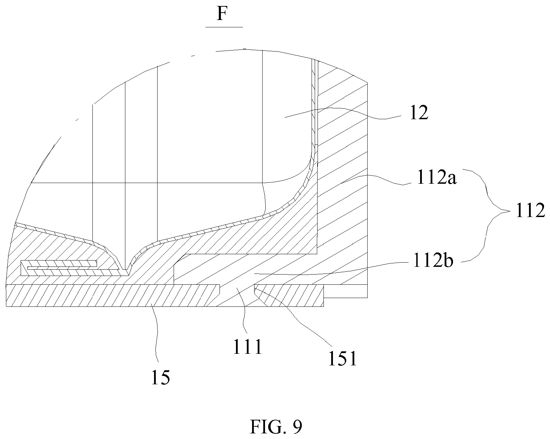

FIG. 7 is a top view of a battery module provided in a second embodiment of the present disclosure, FIG. 8 is a cross-sectional view taken along line E-E in FIG. 7, and FIG. 9 is an enlarged view of a portion F in FIG. 8.

In an implementation, as shown in FIG. 7 to FIG. 9 , the receiving hole 151 is a tapered hole, i.e., an aperture of the receiving hole 151 on a side facing away from the battery cell 12 is larger than its aperture on a side close to the battery cell 12. The boss 111 has a cylindrical shape before hot-melting, and a surface of the hot-melted boss 111 facing away from the battery cell 12 is flush with a surface of the heat conducting plate 15 facing away from the battery cell 12.

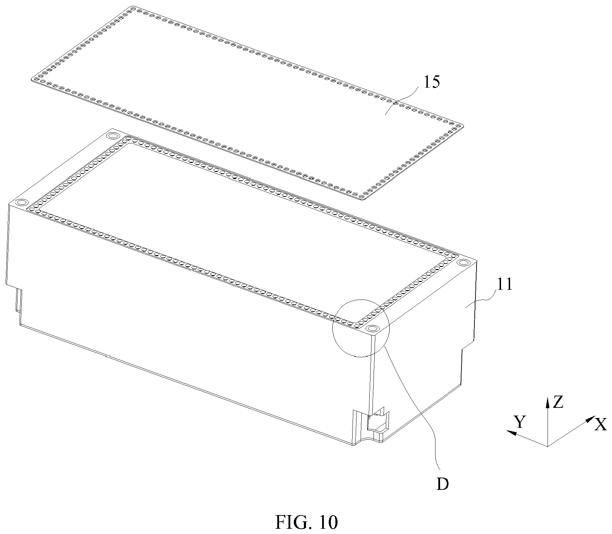

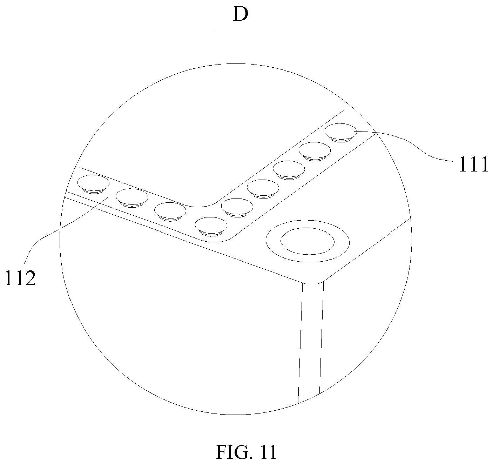

FIG. 10 is a schematic exploded view showing a structure of the battery module provided in the second embodiment of the present disclosure, in which the lower case and the heat conducting plate are to be fitted with each other; and FIG. 11 is an enlarged view of a portion D in FIG. 10.

Referring to FIGs. 9 and 11, FIG. 11 shows a state of the hot-melted boss 111. At this time, the boss 111 is completely filled in the receiving hole 151 to form a shape similar to a "nail cap". A surface of the hot-melted boss 111 facing away from the battery cell 12 is flush with a surface of the heat conducting plate 15 facing away from the battery cell 12, such that the occupied space of the battery module 1 is reduced and the space utilization rate is high, thereby enhancing the energy density of the battery module 1.

As described above, the lower case 11 can be made of a polymer material having an insulating property, and is formed by a molding method such as injection molding, extrusion or mold pressing. In this way, the spattering during welding of the metal lower case in the related art and the failures of other components can be avoided, and thus the quality of the battery module 1 is improved.

The battery cell 12 can have a square or cylindrical shape, which is not limited herein.

The upper cover 13 can be made of a polymer material having an insulating property, and is formed by molding method such as injection molding, extrusion or mold pressing.

The heat conducting plate 15 is made of metal, which has a higher thermal conductivity than the lower case 11 and the upper cover 13. For example, the heat conducting plate is made of metal such as copper or aluminum, which is not further limited herein.

Further, the heat conducting plate 15 is a rectangular plate. It can be understood that the heat conducting plate 15 can also have other shapes as long as it matches with the shape of the lower case 11.

Further, a plurality of receiving holes 151 can be provided. The plurality of receiving holes 151 are arranged at an edge portion of the heat conducting plate 15 along the length direction (direction Y) of the battery module 1. The receiving holes 151 can also be arranged at the edge portion of the heat conducting plate 15 along the width direction (X direction) of the battery module 1. The receiving holes 151 can also be arranged at the edge portion of the heat conducting plate 15 along both the width direction (X direction) and the length direction (Y direction) of the battery module 1. In the embodiment, as an example, the receiving holes 151 are arranged at the edge portion of the heat conducting plate 15 along the length direction and the width direction of the battery module 1, such that more receiving holes 151 can be provided to fit with the bosses 111 on the lower case 11. In view of this, there are more connecting points and the connection strength is greater, and thus the overall structural strength of the battery module 1 is improved.

Correspondingly, positions of the bosses 111 correspond to those of the receiving holes 151, and can be arranged at the bottom of the side plate 112 along the length direction (Y direction) of the battery module 1, and can also be arranged at the bottom of the end plate 113 along the width direction (X direction) of the battery module 1. The boss 111 can also be provided at bottoms of both the side plate 112 and the end plate 113 both along the length direction (Y direction) of the battery module 1 and along the width direction (X direction) of the battery module 1.

In an embodiment, the lower case 11 is provided therein with a structural adhesive 14 fixed to the lower case 11, and the structural adhesive 14 can be a heat conducting structural adhesive. During the assembling of the battery module 1, the lower case 11, the battery cells 12 and the upper cover 13 are assembled first, and then the adhesive is applied. Thus, the application of the adhesive can be monitored in real time, so as to ensure a good application effect of the adhesive. After the adhesive is applied, the receiving hole 151 of the heat conducting plate 15 is fitted and hot-melted with the boss 111 of the lower case 11 to form a stable connection between the heat conducting plate 15 and the lower case 11. The process sequence of assembling the heat conducting plate 15 after applying the adhesive can also prevent the adhesive from overflowing from the lower case 11, and the heat conducting structural adhesive is conducive to the heat transfer, thereby further improving the heat dissipation effect of the battery module 1.

The preferable embodiments of the present disclosure described above are not intended to limit the claims. Those skilled in the art can make various modifications and changes. Any modification, equivalent substitution and improvement made without departing from the concept of the present disclosure shall fall within the protection scope of the present disclosure.

## Claims

1. A battery module, comprising:
a lower case;
a plurality of battery cells sequentially stacked and received in the lower case; and
a heat conducting plate,
wherein a boss is formed on the lower case;
the heat conducting plate is provided with a receiving hole;
the boss fits in the receiving hole, and a part or an entirety of the boss is fixed in the receiving hole; and
wherein the receiving hole is a tapered hole; a surface of the boss facing away from the plurality of battery cells is flush with a surface of the heat conducting plate facing away from the plurality of battery cells.

2. The battery module according to claim 1, wherein the lower case is made of an insulating material.

3. The battery module according to claim 1, wherein the heat conducting plate is made of metal.

4. The battery module according to claim 1, wherein the receiving hole is a circular hole, and the boss forms a connecting portion and a limiting portion;
the connecting portion is located in the receiving hole, and the limiting portion limits the heat conducting plate.

5. The battery module according to claim 1, wherein a plurality of receiving holes is provided, and the plurality of the receiving holes is arranged at an edge portion of the heat conducting plate along a length direction of the battery module; and/or the plurality of the receiving holes is arranged at the edge portion of the heat conducting plate along a width direction of the battery module.

6. The battery module according to claim 5, wherein the lower case comprises two side plates and two end plates, and the two end plates are respectively fixedly connected to the two side plates; a plurality of bosses corresponding to the plurality of receiving holes is arranged at bottoms of the two side plates along the length direction of the battery module; and/or the plurality of bosses is arranged at the bottoms of the two end plates along the width direction of the battery module.

7. The battery module according to claim 6, wherein each of the two side plates comprises a first plate and a second plate which are connected in an L shape;
the first plate extends along a height direction of the battery module;
the second plate extends along the width direction of the battery module; and
the plurality of bosses is disposed on the second plate.

8. The battery module according to claim 1, wherein the lower case is provided therein with a heat conducting structural adhesive fixed at the lower case.

9. The battery module according to claim 1, further comprising an upper cover,
wherein the upper cover and the lower case define a receiving cavity for receiving the plurality of the battery cells.

## Patentansprüche

1. Batteriemodul, das Folgendes umfasst:
ein unteres Gehäuse;
mehrere Batteriezellen, die nacheinander in dem unteren Gehäuse gestapelt und aufgenommen werden; und
eine Wärmeleitplatte,
wobei eine Nabe an dem unteren Gehäuse ausgebildet ist;
die Wärmeleitplatte mit einem Aufnahmeloch versehen ist;
die Nabe in das Aufnahmeloch passt und ein Teil oder eine Gesamtheit der Nabe in dem Aufnahmeloch befestigt ist; und
wobei das Aufnahmeloch ein konisches Loch ist; eine Oberfläche der Nabe, die von den mehreren Batteriezellen abgewandt ist, bündig mit einer Oberfläche der Wärmeleitplatte ist, die von den mehreren Batteriezellen abgewandt ist.

2. Batteriemodul nach Anspruch 1, wobei das untere Gehäuse aus einem isolierenden Material hergestellt ist.

3. Batteriemodul nach Anspruch 1, wobei die Wärmeleitplatte aus Metall hergestellt ist.

4. Batteriemodul nach Anspruch 1, wobei das Aufnahmeloch ein kreisförmiges Loch ist und die Nabe einen Verbindungsabschnitt und einen Begrenzungsabschnitt ausbildet;
wobei sich der Verbindungsabschnitt in dem Aufnahmeloch befindet und der Begrenzungsabschnitt die Wärmeleitplatte begrenzt.

5. Batteriemodul nach Anspruch 1, wobei mehrere Aufnahmelöcher bereitgestellt sind und die mehreren Aufnahmelöcher an einem Randabschnitt der Wärmeleitplatte entlang einer Längsrichtung des Batteriemoduls angeordnet sind; und/oder die mehreren Aufnahmelöcher an dem Randabschnitt der Wärmeleitplatte entlang einer Breitenrichtung des Batteriemoduls angeordnet sind.

6. Batteriemodul nach Anspruch 5, wobei das untere Gehäuse zwei Seitenplatten und zwei Endplatten umfasst und die zwei Endplatten jeweils mit den zwei Seitenplatten fest verbunden sind; mehrere Naben, die den mehreren Aufnahmelöchern entsprechen, die an Unterseiten der zwei Seitenplatten entlang der Längsrichtung des Batteriemoduls angeordnet sind; und/oder die mehreren Naben an den Unterseiten der zwei Endplatten entlang der Breitenrichtung des Batteriemoduls angeordnet sind.

7. Batteriemodul nach Anspruch 6, wobei jede der zwei Seitenplatten eine erste Platte und eine zweite Platte umfasst, die in einer L-Form verbunden sind;
die erste Platte sich entlang einer Höhenrichtung des Batteriemoduls erstreckt;
die zweite Platte sich entlang der Breitenrichtung des Batteriemoduls erstreckt; und
die mehreren Naben auf der zweiten Platte eingerichtet sind.

8. Batteriemodul nach Anspruch 1, wobei das untere Gehäuse darin mit einem wärmeleitenden Strukturklebstoff bereitgestellt ist, der an dem unteren Gehäuse befestigt ist.

9. Batteriemodul nach Anspruch 1, das ferner eine obere Abdeckung umfasst,
wobei die obere Abdeckung und das untere Gehäuse einen Aufnahmehohlraum zum Aufnehmen der mehreren Batteriezellen definieren.

## Revendications

1. Module de batterie comprenant:
un boîtier inférieur;
une pluralité de cellules de batterie empilées séquentiellement et reçues dans le boîtier inférieur; et
une plaque conductrice de chaleur,
dans lequel un bossage est formé sur le boîtier inférieur;
la plaque conductrice de chaleur est pourvue d'un trou de réception;
le bossage s'adapte dans le trou de réception, et une partie ou la totalité du bossage est fixée dans le trou de réception; et
dans lequel le trou de réception est un trou conique; une surface du bossage tournée à l'opposé de la pluralité de cellules de batterie affleure une surface de la plaque conductrice de chaleur tournée à l'opposé de la pluralité de cellules de batterie.

2. Module de batterie selon la revendication 1, dans lequel le boîtier inférieur est constitué d'un matériau isolant.

3. Module de batterie selon la revendication 1, dans lequel la plaque conductrice de chaleur est constituée de métal.

4. Module de batterie selon la revendication 1, dans lequel le trou de réception est un trou circulaire, et le bossage forme une partie de connexion et une partie de limitation;
la partie de connexion est située dans le trou de réception, et la partie de limitation limite la plaque conductrice de chaleur.

5. Module de batterie selon la revendication 1, dans lequel une pluralité de trous de réception est prévue, et la pluralité des trous de réception est agencée au niveau d'une partie de bord de la plaque conductrice de chaleur le long d'une direction de longueur du module de batterie; et/ou la pluralité des trous de réception est agencée au niveau de la partie de bord de la plaque conductrice de chaleur le long d'une direction de largeur du module de batterie.

6. Module de batterie selon la revendication 5, dans lequel le boîtier inférieur comprend deux plaques latérales et deux plaques d'extrémité, et les deux plaques d'extrémité sont respectivement reliées de manière fixe aux deux plaques latérales; une pluralité de bossages correspondant à la pluralité de trous de réception est agencée au niveau des parties inférieures des deux plaques latérales le long de la direction de longueur du module de batterie; et/ou la pluralité de bossages est agencée au niveau des parties inférieures des deux plaques d'extrémité le long de la direction de largeur du module de batterie.

7. Module de batterie selon la revendication 6, dans lequel chacune des deux plaques latérales comprend une première plaque et une seconde plaque qui sont connectées en forme de L;
la première plaque s'étend le long d'une direction de hauteur du module de batterie;
la seconde plaque s'étend le long de la direction de largeur du module de batterie; et
la pluralité de bossages est disposée sur la seconde plaque.

8. Module de batterie selon la revendication 1, dans lequel le boîtier inférieur est pourvu, à l'intérieur, d'un adhésif structurel conducteur de chaleur fixé au boîtier inférieur.

9. Module de batterie selon la revendication 1, comprenant, en outre, un couvercle supérieur,
dans lequel le couvercle supérieur et le boîtier inférieur définissent une cavité de réception pour recevoir la pluralité des cellules de batterie.
